# EUROPÄISCHE PATENTSCHRIFT

(11) **EP 2 414 872 B1**
(45) Veröffentlichungstag und Bekanntmachung des Hinweises auf die Patenterteilung: **11.05.2016**
(21) Anmeldenummer: 10707539.2
(22) Anmeldetag: 11.03.2010
(51) Int. Cl.: G02B 5/20, C03C 3/06, G02B 5/22

(54) **OPTISCHES FILTERMATERIAL AUS GALLIUM-DOTIERTEN QUARZGLAS, FILTERBAUTEIL SOWIE VERFAHREN ZUR BESTRAHLUNG MITTELS EINER UV-STRAHLENQUELLE**
GALLIUM-DOPED QUARTZ MATERIAL FOR OPTICAL FILTER, FILTER DEVICE AND IRRADIATION METHOD USING A UV SOURCE
MATÉRIAU FILTRANT OPTIQUE EN VERRE DE QUARTZ DOPÉ AU GALLIUM, ÉLÉMENT FILTRANT ET PROCÉDÉ D'IRRADIATION AU MOYEN D'UNE SOURCE DE RAYONS UV

(30) Priorität: 31.03.2009 DE 102009015076
(43) Veröffentlichungstag der Anmeldung: 08.02.2012
(73) Patentinhaber: Heraeus Quarzglas GmbH & Co. KG, 63450 Hanau (DE)
(72) Erfinder: NEUMANN, Christian, 35410 Hungen (DE)
(74) Vertreter: Staudt, Armin Walter
(86) Internationale Anmeldenummer: PCT/EP2010/053076
(87) Internationale Veröffentlichungsnummer: WO 2010/112311

(56) Entgegenhaltungen:
- EP-A1- 0 483 477
- DE-A1-102007 057 486
- US-A- 6 136 736
- JI Z ET AL: "Gallium oxide films for filter and solar-blind UV detector" OPTICAL MATERIALS, ELSEVIER SCIENCE PUBLISHERS B.V. AMSTERDAM, NL LNKD- DOI:10.1016/J.OPTMAT.2005.03.006, Bd. 28, Nr. 4, 1. März 2006 (2006-03-01), Seiten 415-417, XP025111659 ISSN: 0925-3467 [gefunden am 2006-03-01]

## Beschreibung

Die Erfindung betrifft gemäß Anspruch 1 ein optisches Filtermaterial aus dotiertem Quarzglas, das für UV-Arbeitsstrahlung einer Wellenlänge von 254 nm eine spektrale Transmission von mindestens 80% cm⁻¹ aufweist und dessen Kantenwellenlänge λ_{c} im Wellenlängenbereich von 230 bis 250 nm liegt.

Weiterhin betrifft die Erfindung gemäß anspruch 11 ein Verfahren zur Bestrahlung einer Oberfläche, einer Flüssigkeit oder eines Gases mittels einer UV-Strahlenquelle, die Arbeitsstrahlung einer Wellenlänge um 254 nm emittiert und die ein Filtermaterial aus dotiertem Quarzglas passiert, das für die Arbeitsstrahlung eine spektrale Transmission von mindestens 80% cm⁻¹ aufweist und dessen Kantenwellenlänge λ_{c} im Wellenlängenbereich von 230 bis 250 nm liegt.

Darüber hinaus betrifft die Erfindung auch ein aus dem Filtermaterial bestehendes optisches Bauteil.

### Stand der Technik

Reines Quarzglas ist für UV-Strahlung im Wellenlängenbereich bis in den UVC-VUV-Bereich transparent und wird daher bevorzugt als Lampenmaterial für UV-Lichtquellen eingesetzt. Derartige Lampen emittieren neben der UV-Arbeitsstrahlung häufig auch einen Anteil an kurzwelligerer ultravioletter Strahlung, die zu Ozonbildung führen und Gesundheitsschäden oder Alterung in der Nähe liegender Bauteile verursachen kann, insbesondere solcher aus Kunststoff.

Eine zusätzliche Herausforderung in dieser Hinsicht ergibt sich bei einer Anwendung von UV-Strahlung zur Entkeimung von Lebensmitteln, Oberflächen und insbesondere von Flüssigkeiten. Dabei wird kurzwellige UV-Strahlung eingesetzt, die die photolytische Bildung von gesundheitsschädlichen Nitriten aus Nitrat fördert, das sich im zu entkeimenden Medium befindet. Mit abnehmender Wellenlänge (ab etwa 270 nm) nimmt die Nitritbildung etwa linear zu. Für die Wasserentkeimung werden häufig Quecksilberdampflampen mit einer Arbeitsstrahlung bei einer Wellenlänge von 254 nm eingesetzt, die auch eine Emissionslinie im UVC-VUV-Wellenlängenbereich um 185 nm haben. Der UV-Wellenlängenbereich unterhalb der eigentlichen Arbeitsstrahlung fördert die Nitritbildung in besonderem Maße.

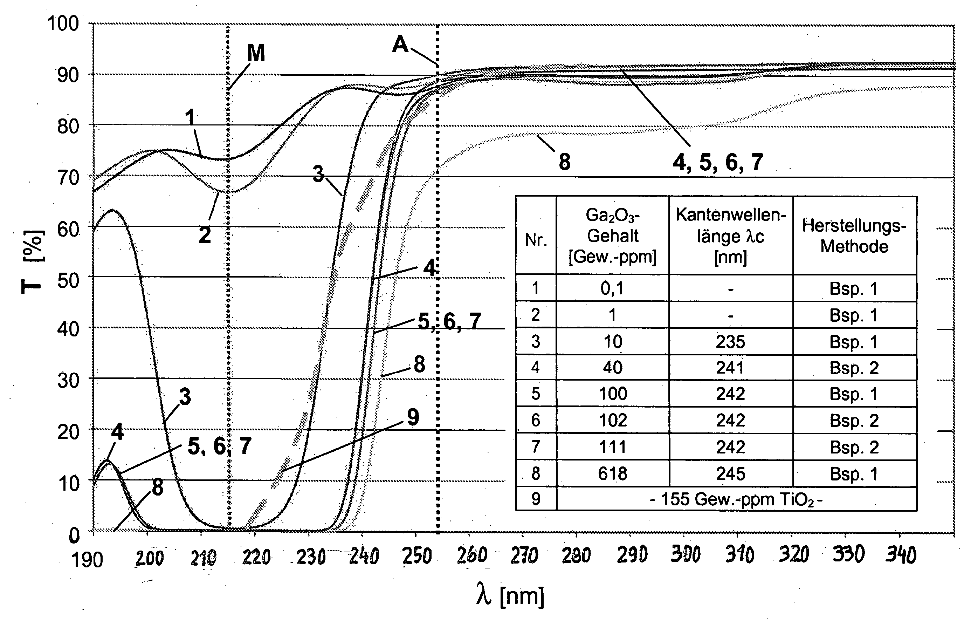

Unerwünschte Anteile der UV-Strahlung im Emissionsspektrum sind daher möglichst zu eliminieren. Durch Dotierung des Quarzglases mit einer UV-Strahlung absorbierenden Substanz kann eine Filterwirkung mit einem Sperrbereich für UV-Strahlung unterhalb von 250 nm erzeugt werden. Als geeignete Substanz in diesem Sinne hat sich Titandioxid erwiesen, das als Dotierstoff in Quarzglas eine Absorptionsbande mit einem Absorptionsmaximum bei etwa 200 nm erzeugt. Bei einem Titangehalt von 155 Gew.-ppm (und einer durchstrahlten Schichtdicke von 0,5 cm) beträgt die innere Transmission dieses Filtermaterials für die Arbeitswellenlänge von 254 nm etwa 90%, und die Kantenwellenlänge liegt um 235 nm (dies zeigt Kurve 9 von Figur 1). Die Kantenwellenlänge λ_{c} entspricht dabei derjenigen Wellenlänge, bei der der spektrale Reintransmissionsgrad zwischen Sperr- und Durchlassbereich die Hälfte des Maximalwerts beträgt.

Die Absorption des Ti-dotierten Quarzglases nimmt bis zur Arbeitswellenlänge von 254 nm jedoch deutlich ab, so dass einerseits zur Erzielung einer nennenswerten Absorption in diesem Wellenlängenbereich hohe Konzentrationen an Titandioxid benötigt werden, und andererseits eine merkliche Abflachung der Absorptionskante zur längerwelligen Seite hin auftritt, die die Transmission im Bereich der Arbeitswellenlänge vermindert.

Eine hohe Dotierstoffkonzentration kann außerdem unerwünschte Veränderungen der Quarzglaseigenschaften bewirken, insbesondere kann sie die Viskosität und den thermischen Ausdehnungskoeffizienten des Quarzglases verändern, seine Kristallisationsneigung erhöhen und die Strahlungsresistenz gegenüber UV-Strahlung verringern, was gerade bei Quarzglas für UV-Lampen besonders nachteilig ist. Denn UV-Strahlungsschäden bewirken eine allmähliche Abnahme der UV-Transmission (Alterung) und damit eine nachlassende und nicht reproduzierbare UVC-Emission.

Aus der US 2003/0114292 A1 ist ein Filtermaterial aus einem Vielkomponentenglas mit einem SiO₂-Anteil von 50 bis 62 % bekannt. Für die Zusammensetzung werden folgende Bereiche genannt: SiO₂: 50-62; K₂O: 10-25; Na₂O: 0-14; Al₂O₃: 0-2; B₂O₃: 3-5; ZnO: 13.5-37; F: 0-1; TiO₂: 0-7; In₂O₃: 0-2; Ga₂O₃: 0-2; SO₃: 0-1; SeO₂: 0-1; C: 0-1. Unterschiedliche Gläser aus diesem Zusammensetzungsbereich werden anhand ihrer Kantenwellenlängen charakterisiert, wobei als kürzeste Wellenlänge 324 nm angegeben wird.

Das bekannte Filtermaterial ist für ultraviolette Strahlung im gesamten Wellenlängenbereich des Fernen UV undurchlässig und daher für einen Einsatz mit UV-Arbeitsstrahlung aus diesem Wellenlängenbereich nicht geeignet.

Die US 6,136,736 beschreibt dotiertes Quarzglas*,* unter anderem als Kolben für Quecksilberdampf Lampen, das neben zahlreichen Alternativen, Ga als Dotierstoff zur Viskositätserhöhung beschreibt.

### Technische Aufgabenstellung

Der Erfindung liegt daher die Aufgabe zugrunde, ein Filtermaterial aus dotiertem Quarzglas anzugeben, das eine möglichst hohe Transparenz für Arbeitsstrahlung von 254 nm, und bei geringer Dotierstoffkonzentration eine möglichst geringe Transparenz im Wellenlängenbereich unterhalb von etwa 250 nm aufweist.

Weiterhin liegt der Erfindung die Aufgabe zugrunde, ein Verfahren anzugeben, das ein effektives Bestrahlen einer Oberfläche, einer Flüssigkeit oder eines Gases mittels UV-Strahlung einer Wellenlänge um 254 nm bei möglichst konstanter UVC-Emission gewährleistet und bei dem gleichzeitig eine möglichst geringe Ozonbildung auftritt.

Hinsichtlich des Filtermaterials wird diese Aufgabe ausgehend von einem Material der eingangs genannten Gattung erfindungsgemäß dadurch gelöst, dass die Lage der Kantenwellenlänge λ_{c} von einer Dotierung bestimmt wird, die eine Galliumverbindung umfasst, die im Wellenlängenbereich unterhalb von 250 nm ein Maximum einer Absorptionsbande aufweist.

Es hat sich gezeigt, dass mit Galliumoxid dotiertes Quarzglas UV-Strahlung absorbiert, wobei die UV-Absorption bei einer Wellenlänge um 215 nm ein relatives oder absolutes Maximum aufweist. Dieses Absorptionsmaximum liegt somit näher an der Arbeitswellenlänge von 254 nm als bei dem bekannten, mit Titanoxid dotierten Quarzglas. Infolgedessen zeigt die Transmissionskurve eines mit Galliumoxid dotierten Quarzglases im Vergleich zu Titanoxid-dotiertem Quarzglas eine steilere Flanke der Absorptionsbande zur längerwelligen Seite, so dass die Absorption bei Wellenlängen um 250 nm vergleichsweise gering ist, und somit bei der Arbeitswellenlänge einer Niederdruck-Quecksilberdampfentladungslampe von 254 nm eine hohe Lichtdurchlässigkeit erreichbar ist.

Damit bestimmt die Galliumverbindung die Lage der Kantenwellenlänge λ_{c}. Das bedeutet, ohne die Dotierung des Quarzglases mit der Galliumverbindung ergäbe sich für λ_{c} eine andere Wellenlänge. Die Kantenwellenlänge liegt im Bereich von 230 bis 250 nm, vorzugsweise bei 235 bis 245 nm. Die Angaben zur Kantenwellenlänge beziehen sich auf eine durchstrahlte Materialschichtdicke von 0,5 cm.

Die UV-Absorption von Galliumoxid ist in mindestens einem Teil des Wellenlängenbereichs von 150 nm bis 250 nm bei gleicher Dotierstoffkonzentration höher als diejenige von Titanoxid. Somit ergibt sich bei vergleichsweise geringer Dotierstoffkonzentration eine hohe Absorption in diesem Wellenlängenbereich.

Das optische Filtermaterial gemäß der Erfindung liegt in der Regel als Bauteil oder Schicht auf einem Bauteil vor. Bei dem Bauteil handelt es sich beispielsweise um ein Rohr, eine Platte, eine Scheibe oder eine Linse.

Es ist zu erwarten, dass auch andere, zu Galliumoxid (Ga₂O₃) chemisch ähnliche Galliumverbindungen, wie etwa Galliumhalogenide oder Galliumnitrid (GaN), die oben erläuterte UV-absorbierende Wirkung haben. Bevorzugt ist die Galliumverbindung jedoch Galliumoxid.

Galliumoxid ist thermisch und chemisch stabil und neigt in Quarzglas nicht zur Blasenbildung.

Besonders bewährt haben sich Konzentrationen der Galliumverbindung (Ga-Konzentration bezogen auf das undotierte Quarzglas), die im Bereich von 1 bis 1000 Gew.-ppm, vorzugsweise im Bereich von 50 bis 500 Gew.-ppm liegen.

Die Absorption hängt von der Konzentration der Galliumverbindung und der durchstrahlten Schichtdicke des Filtermaterials ab. Bei geringer Schichtdicke, wie etwa bei aufgedampften oder aufgesputterten Schichten mit Dicken im µm-Bereich, sind vergleichsweise hohe Konzentrationen der Galliumverbindung erforderlich, um eine nennenswerte Absorption zu bewirken, und geringe Konzentrationen bei einer großen Schichtdicke.

Sofern eine nahezu vollständige Absorption kurzwelliger UV-Strahlung im Wellenlängenbereich um 215 nm erreicht werden soll, sind Konzentrationen im oben genannten Bereich bevorzugt, wenn die Schichtdicken im Bereich von etwa 0,5 bis 5 mm liegen, wie für rohr- oder plattenförmige Bauteile bei Lampenanwendungen typisch. Bei Ga-Konzentrationen von weniger als 1 Gew.-ppm ergibt sich dabei eine relativ geringe UV-Absorption, besonders bei Wellenlängen unterhalb von 200 nm, wohingegen sich bei Ga-Konzentration von mehr als 1000 Gew.-ppm eine merkliche Absorption im Bereich der Arbeitswellenlänge von 254 nm bemerkbar macht. Der Konzentrationsbereich von 50 bis 500 Gew.-ppm stellt einen besonders geeigneten Kompromiss dar, mit dem eine nahezu durchgehende hohe Absorption im Wellenlängenbereich von 150 nm bis etwa 240 nm auch ohne weiteren Dotierstoff erreichbar ist. Hierbei handelt es sich um niedrige Dotierstoffkonzentrationen, die sich auf die chemischen und thermischen Eigenschaften des Quarzglases sowie auf dessen UV-Strahlenbeständigkeit nur geringfügig auswirken.

Andererseits zeigt Galliumoxid in Quarzglas bei einer Wellenlänge um 195 nm eine gegenüber den benachbarten Wellenlängenbereichen geringfügig erhöhte Transmission. Um das geringfügig lichtdurchlässige Fenster auch in diesem Wellenlängenbereich zu schließen, hat es sich als günstig erwiesen, wenn die Dotierung zusätzlich eine Titanverbindung, vorzugsweise eine Titanverbindung in Form von Titanoxid, umfasst.

Titanoxid zeigt eine besonders hohe Absorption für UV-Strahlung einer Wellenlänge unterhalb von etwa 215 nm, wirkt sich aber auch auf die Lichtdurchlässigkeit im Bereich der Arbeitswellenlänge aus. Durch die Co-Dotierung mit Galliumoxid genügen vergleichsweise geringe Mengen an Titanoxid, um das relative Absorptionsminimum von Galliumoxid im kurzwelligen Bereich zu kompensieren. Insgesamt sind daher relativ geringe Konzentrationen sowohl an Galliumoxid als auch an Titanoxid zur vollständigen Absorption der kurzwelligen UV-Strahlung erforderlich, so dass die Transmission im Bereich der Arbeitswellenlänge hoch bleibt und auch die übrigen Eigenschaften des Quarzglases durch die Dotierung nicht nennenswert beeinträchtigt werden.

Im Hinblick hierauf wird eine Ausführungsform des erfindungsgemäßen Filtermaterials besonders bevorzugt, bei dem die Konzentration der Titanverbindung (TiO₂-Konzentration bezogen auf das undotierte Quarzglas) im Bereich von 1 bis 50 Gew.-ppm liegt, und vorzugsweise weniger als 20 Gew.-ppm beträgt.

Um eine Beeinträchtigung der chemischen und physikalischen Eigenschaften des Quarzglases, wie Viskosität, thermischer Ausdehnungskoeffizient und chemische Beständigkeit durch die Dotierung zu minimieren, wird deren Konzentration so gering wie möglich gehalten. Dies wird durch eine zusätzliche Titandioxid-Dotierung im oben genannten Bereich erleichtert.

In dem Zusammenhang hat es sich besonders bewährt, wenn die Dotierung Galliumoxid (Ga₂O₃) und Titanoxid (TiO₂) umfasst, wobei das Molverhältnis von Ga:Ti im Bereich von 10 bis 100 liegt.

Hierbei ist eine Mischdotierung aus Galliumoxid und Titanoxid mit einem höheren Anteil an Galliumoxid vorgesehen. Der Galliumoxid-Anteil trägt im Wesentlichen zu einer Absorption im Wellenlängenbereich von 150 bis etwa 240 nm bei, und der Titanoxid-Anteil vermindert zusätzlich die Transmission bei einer Wellenlänge um 195 nm. Dadurch wird bei geringer Dotierstoff-Konzentration ein Quarzglas mit nahezu durchgängig hoher Absorption im kurzwelligen UV-Wellenlängenbereich erhalten. Die geringe Dotierstoff-Konzentration wirkt sich insbesondere auf die UV-Strahlenbeständigkeit des Filtermaterials vorteilhaft aus.

Natürlich vorkommendes SiO₂-Ausgangsmaterial für die Herstellung von Quarzglas enthält häufig einen gewissen Anteil an TiO₂ im ppm-Bereich. Bei Einsatz eines derartigen Ausgangsmaterials kann eine geeignete Mischdotierung aus Galliumoxid und Titanoxid auch ohne Zudotierung von Titanoxid erhalten werden.

Vorzugsweise ist das Quarzglas des Filtermaterials ein synthetisch erzeugtes Quarzglas.

Synthetisch erzeugtes Quarzglas zeichnet sich durch eine hohe Transmission im Bereich der Arbeitswellenlänge sowie durch eine hohe UV-Strahlenbeständigkeit aus. Dies kann unter anderem auf einen geringen Gehalt an Sauerstoffdefizitdefekten zurückgeführt werden, wie sie etwa unter reduzierenden Schmelzbedingungen bei elektrisch geschmolzenem Quarzglas auftreten können.

Erfindungsgemäß erweist es sich als günstig, wenn der SiO₂-Gehalt des Filtermaterials mindestens 99,9 Gew.-% beträgt.

Der hohe Anteil an SiO₂ im Filtermaterial gewährleistet eine hohe Transparenz für die UV-Arbeitsstrahlung und eine besonders hohe UV-Strahlenbeständigkeit. Insbesondere, wenn das Quarzglas aus synthetisch erzeugtem SiO₂ besteht.

Synthetisch erzeugtes Quarzglas weist jedoch häufig einen hohen Hydroxylgruppengehalt auf, der zu einer Verringerung der thermischen Formbeständigkeit des Quarzglases führt. Um diesen Nachteil zu vermindern, zeichnet sich das erfindungsgemäße Filtermaterial bevorzugt dadurch aus, dass das Quarzglas einen Hydroxylgruppengehalt von weniger als 10 Gew.-ppm, vorzugsweise weniger als 1 Gew.-ppm, aufweist.

Das Filtermaterial gemäß der Erfindung vermindert den kurzwelligen UV-Anteil und vermeidet so die Bildung von Ozon. Es eignet sich insbesondere für die Herstellung von Lampenmaterial für UV-Entladungslampen, wie etwa als Lampenrohr oder als Hüllrohr zur Umhüllung von Lampen. Es ist aber auch als Linsenwerkstoff geeignet, zum Beispiel für mikrolithographische Belichtungsgeräte.

Hinsichtlich des Bestrahlungsverfahrens wird die oben genannte Aufgabe ausgehend von einem Bestrahlungsverfahren der eingangs genannten Gattung erfindungsgemäß dadurch gelöst, dass ein Filtermaterial gemäß Anspruch 1 eingesetzt wird, bei dem die Lage der Kantenwellenlänge λ_{c} von einer Dotierung bestimmt wird, die eine Galliumverbindung umfasst, die im Wellenlängenbereich unterhalb von 250 nm ein Maximum einer Absorptionsbande aufweist.

Mit Galliumoxid dotiertes Quarzglas zeigt ein ausgeprägtes und steiles Absorptionsmaximum bei einer Wellenlänge um 215 nm, das sich auf die Absorption bei der Arbeitswellenlänge von 254 nm wenig auswirkt und daher eine effektive UV-Bestrahlung mittels einer Niederdruck-Quecksilberdampfentladungslampe bei der Arbeitswellenlänge von 254 nm ermöglicht.

Das erfindungsgemäße Verfahren ermöglicht ein effektives Bestrahlen von Lebensmitteln, Luft und technischen Gütern, wobei aufgrund der hohen Strahlenbeständigkeit des Glases eine weitgehende zeitliche Konstanz der Emission der UV-Arbeitsstrahlung der Wellenlänge um 254 nm gewährleistet ist. Außerdem vermindert die vergleichsweise steile Absorptionskante eine Ozonbildung.

Die Lage der Kantenwellenlänge λ_{c} wird dabei von der Galliumverbindung bestimmt. Das bedeutet, ohne die Dotierung ergäbe sich für λ_{c} eine andere Wellenlänge.

Die Konzentration der Galliumverbindung (Ga-Konzentration bezogen auf das undotierte Quarzglas) liegt im Bereich von 1 bis 1000 Gew.-ppm, vorzugsweise im Bereich von 50 bis 500 Gew.-ppm. Hierbei handelt es sich um eine vergleichsweise niedrige Dotierstoffkonzentration, die sich auf die chemischen und thermischen Eigenschaften des Quarzglases sowie auf dessen UV-Strahlenbeständigkeit nur geringfügig auswirkt.

Das erfindungsgemäße Verfahren ist unter Einsatz des Filtermaterials gemäß der Erfindung durchführbar. Daher ergeben sich aus den Unteransprüchen zum erfindungsgemäßen Filtermaterial auch vorteilhafte Ausgestaltungen des Verfahrens. Insoweit wird auf die obigen Erläuterungen zu den bevorzugten Ausführungsformen zum Filtermaterial hingewiesen.

Hinsichtlich des optisches Filterbauteils wird die oben angegebene Aufgabe erfindungsgemäß dadurch gelöst, dass es aus einem Filtermaterial gemäß der Erfindung besteht und für UV-Arbeitsstrahlung einer Wellenlänge von 254 nm eine spektrale Transmission von mindestens 80% cm⁻¹ sowie eine Kantenwellenlänge λ_{c} im Wellenlängenbereich von 230 bis 250 nm aufweist.

Das erfindungsgemäße Filterbauteil zeichnet sich durch ein spektrales Transmissionsprofil aus, das einerseits eine effektive Bestrahlung im Wellenlängenbereich um 254 nm ermöglicht und andererseits UV-Strahlung mit Wellenlängen <250 nm weitgehend absorbiert. Dies wird durch die Lage der Kantenwellenlänge λ_{c} und die Steilheit der Absorptionsflanke erreicht, die sich infolge der Dotierung des Quarzglases mit Gallium ergibt. Insoweit wird auf die obigen Erläuterungen zum erfindungsgemäßen Filtermaterial verwiesen, die gleichermaßen für das Filterbauteil gemäß der Erfindung zutreffen.

Das optische Filterbauteil liegt beispielsweise als Rohr, Platte oder Linse vor. Typische Schichtdicken des Bauteils liegen im Bereich von 1 mm bis 5 mm.

### Ausführungsbeispiel

Nachfolgend wird die Erfindung anhand von Ausführungsbeispielen und einer Zeichnung näher erläutert. Dabei zeigt
- **Figur 1**: ein Diagramm mit Transmissionskurven von optischen Filtermaterialen gemäß der Erfindung im Vergleich mit einem titanoxiddotierten Quarzglas gemäß dem Stand der Technik.

Das erfindungsgemäße optische Filtermaterial ist mittels der üblichen Methoden zur Herstellung von dotiertem Quarzglas herstellbar. Als Beispiel seien Schlickerverfahren, Sol-Gel-Verfahren oder CVD-Verfahren unter Einsatz verdampfbarer Ausgangsverbindungen, wie GaCl₃ genannt. Insoweit wird auch auf die Methoden zur Dotierung von Quarzglas mit dem chemisch ähnlichen Dotierstoff Al₂O₃ verwiesen. Im Folgenden werden andere bevorzugte Beispiele zur Herstellung des erfindungsgemäßen optischen Filtermaterials erläutert:

### Beispiel 1

Als Ausgangsmaterial wird eine handelsübliche SiO₂-Körnung eingesetzt, die aus synthetisch erzeugten, sphärischen, dichten SiO₂-Teilch besteht. Die SiO₂-Teilchen zeigen eine mehrmodale Teilchengrößenverteilung mit einem verhältnismäßig engen Maximum der Größenverteilung bei etwa 30 µm (D₅₀-Wert) und mit einem Nebenmaximum im Bereich um 2 µm. Das Ausgangsmaterial wird durch Heißchlorieren bei hoher Temperatur (ca. 1050 °C) gereinigt.

10 kg dieser SiO₂-Körnung werden mit 10 g Ga₂O₃ (1000 Gew.-ppm Ga₂O₃; mit der Ga-Konzentration bezogen auf das undotierte Quarzglas) mittels einer Kugelmühle mit einer Wandung und mit Mahlkörpern aus Quarzglas homogen vermischt. Dieser Grundmischung wird weitere SiO₂-Körnung zugemischt, so dass nach erneuter Homogenisierung Pulvermischungen mit folgenden nominalen Dotierstoffkonzentrationen erhalten werden (Ga in Gew.-ppm Ga-Konzentration bezogen auf das undotierte Quarzglas): 0,1 / 1,0 / 10 / 100 / 618.

Die Pulvergemische werden jeweils in eine hohlzylindrische Grafitform gegeben und in einem Sinterofen durch Gasdrucksintern verglast. Hierbei wird die Grafitform zunächst langsam auf 1100 °C aufgeheizt. Während einer ersten Phase von neun Stunden, die das Aufheizen und die ersten drei Stunden der Haltezeit bei dieser Temperatur umfasst, wird im Sinterofen ein Vakuum (< 5 mbar) aufrechterhalten, unterbrochen von Inertgas-Spülvorgängen. Während einer anschließenden zweiten Phase wird ein Stickstoffüberdruck von 12 bar erzeugt und - von einem Gasaustausch der Ofenatmosphäre unterbrochen - insgesamt zwölf Stunden aufrechterhalten, bevor die Ofentemperatur unter Vakuum auf 1550 °C erhöht wird. Bei dieser Temperatur wird das Pulvergemisch während einer Dauer von 2,5 h und unter Vakuum gesintert und anschließend auf eine Temperatur von 1700 °C aufgeheizt und dabei zu einem Block aus transparentem Quarzglas mit einem Hydroxylgruppengehalt von weniger als 1 Gew.-ppm verglast. Aufgrund dieser Herstellungsmethode erfolgt das Schmelzen der Quarzgläser unter leicht reduzierenden Bedingungen in einer wasserstofffreien Atmosphäre.

Auf diese Weise werden Blöcke aus Ga-haltigem Quarzglas erhalten, die einer Transmissionsmessung im Wellenlängenbereich von 190 nm bis 350 nm unterzogen werden. Die Ergebnisse dieser Messungen sind in Fig. 1 dargestellt und werden weiter unten noch näher erläutert.

### Beispiel 2

11,1 g metallisches Gallium werden in einer HNO₃-Lösun gelöst. 100 kg gereinigte SiO₂-Körnung (wie in Beispiel 1 beschrieben) wird mit der Ga-haltigen HNO₃-Lösung homogen vermischt. Durch Entfernen des Lösungsmittels fällt ein Gallium enthaltender Feststoff aus, der die SiO₂-Körnung gleichmäßig bedeckt. Durch nachfolgende Oxidation wird daraus Galliumoxid in einer Menge, die einem Gewichtsanteil von 111 Gew.-ppm an Gallium (Ga-Konzentration bezogen auf das undotierte Quarzglas) entspricht. Auf entsprechende Art und Weise werden weitere dotierte Quarzglaskörnungen mit nominalen Dotierstoffkonzentrationen an Gallium von 40 Gew.-ppm und 102 Gew.-ppm hergestellt.

Die dotierte SiO₂-Körnung wird jeweils in einem Lichtbogen-Rotationsverfahren bei Temperaturen von über 2000 C unter reiner Argonatmosphäre eingeschmolzen, so dass ein Hohlzylinder aus Quarzglas mit einem Innendurchmesser von 150 mm erzeugt wird. Nach mechanischer Bearbeitung wird daraus ein so genanntes Mutterrohr erhalten, das nach einem üblichen werkzeugfreien Ziehverfahren zu einem Lampenrohr elongiert wird. Das so erhaltene Rohr besteht aus Quarzglas mit einem nominalen Ga-Gehalt von 111 Gew.-ppm. Das so dotierte Quarzglas zeigt die weiter unten anhand Fig. 1 näher erläuterte Transmissionskurve und ist beispielsweise für Halogenglühlampen und Entladungslampen geeignet. Auch bei dieser Herstellungsmethode erfolgt das Schmelzen der Quarzgläser unter leicht reduzierenden Bedingungen ein einer wasserstofffreien Atmosphäre.

### Beispiel 3

10 g metallisches Gallium und 0,5 g metallisches Titan werden in HNO₃ gelöst. 100 kg gereinigte SiO₂-Körnung (wie in Beispiel 2 beschrieben) wird mit der Gaund Ti-haltigen HNO₃-Lösun homogen vermischt. Durch Entfernen des Lösungsmittels fällt eine Gallium und Titan enthaltende Verbindung aus, die die SiO₂-Körnung gleichmäßig bedeckt. Durch nachfolgende Oxidation wird daraus Galliumoxid und Titanoxid mit einem Gewichtsanteil, die etwa 100 Gew.-ppm an Gallium und 5 Gew.-ppm an Titan (jeweils Ga-Konzentration bezogen auf das undotierte Quarzglas) entspricht. Aus der beschichteten SiO₂-Körnung wird ein mit Galliumoxid und Titanoxid dotiertes Quarzglas anhand der in Beispiel 2 beschriebenen Methode hergestellt.

In **Figur 1** zeigt die Transmissionskurven 1 bis 8 der dotierten Quarzgläser, deren Herstellung anhand der Beispiele 1 und 2 beschrieben worden ist. Das Diagramm zeigt die gemessene Transmission (in %) bei einer Probendicke von 5 mm über den Wellenlängenbereich von 190 bis 350 nm. In der dazugehörigen Tabelle sind die Zusammensetzung, die Herstellungsmethode und die jeweilige Kantenwellenlänge angegeben.

Zum Vergleich ist außerdem der Transmissionsverlauf 9 eines handelsüblichen mit 155 Gew.-ppm Titanoxid dotieren Quarzglases eingetragen (bezogen auf undotiertes Quarzglas).

Es ist ersichtlich, dass die Dotierung mit Galliumoxid eine Absorption mit einem Maximum "M" bei einer Wellenlänge um 215 nm erzeugt. Mit zunehmender Dotierstoffkonzentration verbreitert sich das Absorptionsmaximum. Bei einer Gallium-Konzentration von 10 Gew.-ppm (Kurve 3) wird bei der gegebenen Probendicke im Bereich des Absorptionsmaximums keine Transmission mehr gemessen.

Bei einer Gallium-Konzentration im Bereich von 40 bis 102 Gew.-ppm (Kurven 4 bis 7) verbreitert sich der Bereich der Null-Transmission auf Wellenlängen von 200 nm bis etwa 235 nm. Bemerkenswert ist, dass die Flanke des Absorptionsmaximums zur längerwelligen Seite hin relativ steil verläuft, jedenfalls deutlich steiler als die entsprechende Flanke des Absorptionsmaximums bei dem Titanoxid-dotierten Quarzglas gemäß Kurve 9. Im kurzwelligen Bereich ergibt sich bei diesen Dotierstoff-Konzentrationen noch ein kleines Transmissionsfenster bei Wellenlängen unterhalb von 200 nm.

Wie die Transmissionskurve 8 zeigt, ist bei einer Ga-Konzentration von 618 Gew.-ppm (bezogen auf das undotierte Quarzglas) das Transmissionsfenster bei Wellenlängen unterhalb von 200 nm geschlossen. Der vollständig abgeblockte Wellenlängenbereich kann somit durch weitere Erhöhung der Galliumoxid-Konzentra-tion zwar verbreitert werden, jedoch führt die auf 618 Gew.-ppm erhöhte Ga-Kon-zentration auch zu einer flacheren Flanke des Absorptionsmaximums und damit zu einer Verringerung der Transmission im Bereich der Arbeitswellenlänge "A". Bei den bevorzugten Quarzglasdotierungen gemäß den Proben 3 bis 7 wird im Bereich der Arbeitswellenlänge von 254 nm eine spektrale Transmission von mehr als 85 % erreicht.

Das Quarzglas mit der Zusammensetzung von Probe 5 wird zur Herstellung des Lampenkolbens einer Quecksilberniederdrucklampe verwendet, die eine Nominal-Leistung von 10 W (bei einem nominalen Lampenstrom von 425 mA), eine Strahlerlänge von 20 cm und somit durch eine Leistungsdichte von etwa 0,5 W/cm aufweist. Der Lampenkolben besteht aus einem Rohr aus dem dotierten Quarzglas, das an seinen Enden mit Quetschungen verschlossen ist, durch die elektrische Anschlüsse zu wendelförmigen Elektrode geführt sind.

Zur Entkeimung von Trinkwasser wird sie in ein geschlossenes Hüllrohr eingesetzt, das von dem zu entkeimenden Trinkwasser umströmt wird.

Die Quecksilberniederdrucklampe emittiert UVC-Strahlung mit einem Emissionsmaximum um 184 nm und einem weiteren Maximum bei 254 nm. Das Ga-dotierte Quarzglas wirkt für das Emissionsspektrum der Lampe als Kantenfilter für den kurzwelligen Anteil der UVC-Strahlung. Die spektrale Transmission bei der Wellenlänge von 254 nm liegt bei 87 % und bei 230 nm bei 0%. Die Kantenwellenlänge λ_{c} liegt bei etwa 242 nm.

Die Ozonbildung ist damit vergleichsweise gering. Aufgrund der geringen Dotierstoffkonzentration weist das Quarzglas eine gute UV-Strahlenbeständigkeit auf, so dass keine nennenswerte Alterung im Betrieb auftritt.

## Patentansprüche

1. Optisches Filtermaterial aus dotiertem Quarzglas, das für UV-Arbeitsstrahlung einer Wellenlänge von 254 nm eine spektrale Transmission von mindestens 80% cm⁻¹ aufweist und dessen Kantenwellenlänge λ_{c} im Wellenlängenbereich von 230 bis 250 nm liegt, **dadurch gekennzeichnet, dass** der SiO₂-Gehalt mindestens 99,9 Gew.-% beträgt und dass die Kantenwellenlänge λ_{c} von einer Dotierung bestimmt wird, die eine Galliumverbindung umfasst, die im Wellenlängenbereich unterhalb von 250 nm ein Maximum einer Absorptionsbande aufweist.

2. Filtermaterial nach Anspruch 1, **dadurch gekennzeichnet, dass** die Galliumverbindung Ga₂O₃ ist.

3. Filtermaterial nach Anspruch 1 oder 2, **dadurch gekennzeichnet, dass** die Konzentration der Galliumverbindung, nämlich die Ga-Konzentration bezogen auf das undotierte Quarzglas, im Bereich von 1 bis 1000 Gew.-ppm liegt.

4. Filtermaterial nach Anspruch 3, **dadurch gekennzeichnet, dass** die Konzentration der Galliumverbindung, nämlich die Ga-Konzentration bezogen auf das undotierte Quarzglas im Bereich von 50 bis 500 Gew.-ppm liegt.

5. Filtermaterial nach einem der vorhergehenden Ansprüche, **dadurch gekennzeichnet, dass** die Dotierung eine Titanverbindung, vorzugsweise eine Titanverbindung in Form von TiO₂, umfasst.

6. Filtermaterial nach Anspruch 5, **dadurch gekennzeichnet, dass** die Konzentration der Titanverbindung, nämlich die Ti-Konzentration bezogen auf das undotierte Quarzglas im Bereich von 1 bis 50 Gew.-ppm liegt.

7. Filtermaterial nach Anspruch 6, **dadurch gekennzeichnet, dass** die Konzentration der Titanverbindung,nämlich die Ti-Konzentration bezogen auf das undotierte Quarzglas weniger als 20 Gew.-ppm beträgt.

8. Filtermaterial nach einem der vorhergehenden Ansprüche, **dadurch gekennzeichnet, dass** die Dotierung Galliumoxid (Ga₂O₃) und Titanoxid (TiO₂) umfasst, wobei das Molverhältnis von Ga:Ti im Bereich von 10 bis 100 liegt.

9. Filtermaterial nach einem der vorhergehenden Ansprüche, **dadurch gekennzeichnet, dass** das Quarzglas ein synthetisch erzeugtes Quarzglas ist.

10. Filtermaterial nach einem der vorhergehenden Ansprüche, **dadurch gekennzeichnet, dass** das Quarzglas einen Hydroxylgruppengehalt von weniger als 10 Gew.-ppm, vorzugsweise weniger als 1 Gew.-ppm, aufweist.

11. Verfahren zum Bestrahlen einer Oberfläche, einer Flüssigkeit oder eines Gases mittels einer UV-Strahlenquelle, die Arbeitsstrahlung einer Wellenlänge um 254 nm emittiert und die ein Filtermaterial aus dotiertem Quarzglas passiert, das für die Arbeitsstrahlung eine spektrale Transmission von mindestens 80% cm⁻¹ aufweist und dessen Kantenwellenlänge λ_{c} im Wellenlängenbereich von 230 bis 250 nm liegt, **dadurch gekennzeichnet, dass** ein Filtermaterial nach Anspruch 1 eingesetzt wird.

12. Optisches Filterbauteil aus einem Filtermaterial gemäß einem der Ansprüche 1 bis 10.

## Claims

1. An optical filter material made of doped quartz glass, which for UV operating radiation of a wavelength of 254 nm exhibits a spectral transmission of at least 80% cm⁻¹ and has an edge wavelength λ_{c} in a wavelength range of 230 nm to 250 nm, **characterized in that** its SiO₂ content is at least 99.9 wt.% and that the edge wavelength λ_{c} is produced by doping with a gallium compound that has a maximum of an absorption band in a wavelength range below 250 mm.

2. The filter material according to claim 1, **characterized in that** the gallium compound is Ga₂O₃.

3. The filter material according to claim 1 or 2, **characterized in that** the concentration of the gallium compound, namely the Ga concentration based on the undoped quartz glass, is in the range of 1 to 1000 wt. ppm.

4. The filter material according to claim 3, **characterized in that** the concentration of the gallium compound, namely the Ga concentration based on the undoped quartz glass, is in the range of 50 to 500 wt. ppm.

5. The filter material according to any one of the preceding claims, **characterized in that** the dopant comprises a titanium compound, preferably a titanium compound in the form of TiO₂.

6. The filter material according to claim 5, **characterized in that** the concentration of the titanium compound, namely the Ti concentration based on the undoped quartz glass, is in the range of 1 to 50 wt. ppm.

7. The filter material according to claim 6, **characterized in that** the concentration of the titanium compound, namely the Ti concentration based on the undoped quartz glass, is less than 20 wt. ppm.

8. The filter material according to any one of the preceding claims, **characterized in that** said doping comprises gallium oxide (Ga₂O₃) and titanium oxide (TiO₂), the mol ratio of Ga:Ti being in the range of 10 to 100.

9. The filter material according to any one of the preceding claims, **characterized in that** the quartz glass is synthetically produced silica.

10. The filter material according to any one of the preceding claims, **characterized in that** the quartz glass has a hydroxyl group content of less than 10 wt. ppm, preferably less than 1 wt. ppm.

11. A method for irradiating a surface, a liquid or a gas by means of a UV radiation source that emits operating radiation of a wavelength around 254 nm, said operating radiation passing a filter material of doped quartz glass that for the operating radiation exhibits a spectral transmission of at least 80% cm⁻¹ and has an edge wavelength λ_{c} in the wavelength range of 230 nm to 250 nm, **characterized in that** the filter material is a filter material according to claim 1.

12. An optical filter component made of a filter material according to any one of claims 1 to 10.

## Revendications

1. Matériau optique filtrant en verre de quartz dopé qui présente pour un rayonnement de travail UV d'une longueur d'onde de 254 nm une transmission spectrale d'au moins 80 % cm⁻¹ et dont la longueur d'onde de bord λ_{c} est comprise entre 230 et 250 nm, **caractérisé en ce que** la concentration de SiO₂ est d'au moins 99,9 % en poids, et **en ce que** la longueur d'onde de bord λ_{c} est déterminée par un dopage qui comprend un composé de gallium qui présente une bande d'absorption maximale dans la plage de longueur d'onde inférieure à 250 nm.

2. Matériau filtrant selon la revendication 1, **caractérisé en ce que** le composé de gallium est Ga₂O₃.

3. Matériau filtrant selon la revendication 1 ou 2, **caractérisé en ce que** la concentration de composé de gallium, notamment la concentration de Ga par rapport au verre de quartz non dopé, est comprise entre 1 et 1000 ppm en poids.

4. Matériau filtrant selon la revendication 3, **caractérisé en ce que** la concentration de composé de gallium, notamment la concentration de Ga par rapport au verre de quartz non dopé, est comprise entre 50 et 1000 ppm en poids.

5. Matériau filtrant selon l'une des revendications précédentes, **caractérisé en ce que** le dopage comprend un composé de titane, de préférence un composé de titane sous forme de TiO₂.

6. Matériau filtrant selon la revendication 5, **caractérisé en ce que** la concentration de composé de titane, notamment la concentration de Ti par rapport au verre de quartz non dopé, est comprise entre 1 et 50 ppm en poids.

7. Matériau filtrant selon la revendication 5, **caractérisé en ce que** la concentration de composé de titane, notamment la concentration de Ti par rapport au verre de quartz non dopé, est inférieure à 20 ppm en poids.

8. Matériau filtrant selon l'une des revendications précédentes, **caractérisé en ce que** le dopage comprend un oxyde de gallium (Ga₂O₃) et un composé de titane (TiO₂), le rapport molaire de Ga:Ti étant compris entre 10 à 100.

9. Matériau filtrant selon l'une des revendications précédentes, **caractérisé en ce que** le verre de quartz est un verre de quartz généré synthétiquement.

10. Matériau filtrant selon l'une des revendications précédentes, **caractérisé en ce que** le verre de quartz présente une teneur en groupes hydroxyles inférieure à 10 ppm en poids, de préférence inférieure à 1 ppm en poids.

11. Procédé pour le rayonnement d'une surface, d'un liquide ou d'un verre au moyen d'une source de rayonnement UV, qui émet un rayonnement de travail d'une longueur d'onde de 254 nm et qui traverse un matériau filtrant en verre de quartz dopé, qui présente pour le rayonnement de travail une transmission spectrale inférieure à 80 % cm⁻¹ et dont la longueur d'onde de bord λ_{c} est comprise entre 230 et 250 nm, **caractérisé en ce qu'**un matériau filtrant est utilisé selon la revendication 1.

12. Composant optique filtrant en matériau filtrant selon l'une des revendications 1 à 10.
